# EUROPEAN PATENT APPLICATION

(11) **EP 3 825 022 A1**
(43) Date of publication of application: **26.05.2021**
(21) Application number: 19837688.1
(22) Date of filing: 17.07.2019
(51) Int. Cl.: B21D 5/02, B21D 37/04

(54) **TOOL FOR PRESS BRAKE**

(30) Priority: 17.07.2018 JP 2018134168; 17.07.2018 JP 2018134151; 27.07.2018 JP 2018140886; 11.09.2018 JP 2018169366; 07.05.2019 JP 2019087437; 16.05.2019 JP 2019092892; 12.06.2019 JP 2019109717; 14.06.2019 JP 2019111277; 08.07.2019 JP 2019126935
(71) Applicant: Amada Co., Ltd., Isehara-shi, Kanagawa 259-1196 (JP)
(72) Inventor: SATO, Masaaki, Isehara-shi, Kanagawa 259-1196 (JP); HAYASHI, Shiro, Isehara-shi, Kanagawa 259-1196 (JP); KAMADA, Shingo, Isehara-shi, Kanagawa 259-1196 (JP); YAMADA, Hideto, Isehara-shi, Kanagawa 259-1196 (JP); YAMAGUCHI, Yohei, Isehara-shi, Kanagawa 259-1196 (JP)
(74) Representative: Grünecker Patent- und Rechtsanwälte PartG mbB
(86) International application number: PCT/JP2019/028025
(87) International publication number: WO 2020/017532

(57) **Abstract**

A tool (10) for a press brake includes a tool main body (18), an attachment portion (20) formed on a base end side (one end side) of the tool main body and configured to be detachably attached to a tool installation portion (14) of the press brake by using a tool changer (12), and a bending portion (22) formed on a tip side (the other end side) of the tool main body and used to bend a plate-shaped workpiece. At a correspondent position, in a lateral direction, in the tool main body to a gravity-center position (the gravity-center position of the tool), an engagement hole (18h) having a circular cross-sectional shape to be engaged with a bar-shaped finger (30) of the tool changer extends in a thickness direction (a direction of a thickness of the tool).

## Description

### Technical Field

The present invention relates to a tool to be automatically changed with respect to a tool installation portion of a press brake by using a tool changer.

### Background Art

To automatically change a tool for a tool installation part of a press brake, an automatic tool changer (ATC) may be used (see Patent Literatures 1 to 3 below). Patent Literatures 1 to 3 disclose an upper tool as a tool to be automatically changed.

The upper tool disclosed in Patent Literatures 1 to 3 comprises a tool main body. On a base end side of the tool main body, an attachment portion (a shank) to be detachably attached to the tool installation part of the press brake is formed. On a tip side of the tool main body, a bending portion to bend a plate-shaped workpiece is formed. In each of opposite surfaces (a front surface and a back surface) of the attachment portion, a V-shaped groove engaged with a locking piece of the tool installation part is formed along a lateral direction.

Below the V-shaped groove in the surface of the attachment portion, an accommodation depressed portion extending in a vertical direction is formed. In the accommodation depressed portion, an anti-drop operation member extending in the vertical direction is accommodated movably in a thickness direction (a direction along a thickness of a tool). At an upper end of the operation member, an engagement protrusion that is engageable in an engagement groove of the tool installation part is provided. Then, at a lower end of the operation member, a push button to release an engaged state of the engagement protrusion in the engagement groove of the tool installation part is provided. Additionally, for the tool to be automatically changed as disclosed in Patent Literatures 1 and 2, an elongated hole, into which a hook member of the tool changer is inserted for operating the push button, extends through the tool below the push button in the thickness direction. The elongated hole is formed to be long in the vertical direction.

Note that in addition to Patent Literatures 1 to 3, Patent Literature 4 described below is also associated prior technical literature.

### Citation List

### Patent Literatures

Patent Literature 1: Japanese Patent No. 4558852
Patent Literature 2: Japanese Patent No. 4672868
Patent Literature 3: Japanese Patent No. 5252837
Patent Literature 4: Japanese Patent No. 5841800

### Summary of Invention

For a tool to be automatically changed as disclosed in Patent Literatures 1 and 2, as components to automatically change a tool for a tool installation part of a press brake, an operation member extending in a vertical direction, and elongated holes extending in the vertical direction and arranged in series to the operation member in the vertical direction are required. Furthermore, the operation member extending in the vertical direction is required, as such a component, for a tool to be automatically changed which is disclosed in Patent Literature 3. That is, a height of the tool to be automatically changed as disclosed in Patent Literatures 1 to 3 is larger than a height of a usual tool. Therefore, the usual tool cannot be modified to form the tool to be automatically changed, by postprocessing.

Additionally, in the tool to be automatically changed which is disclosed in each of Patent Literatures 1 and 2, the elongated hole extends through an attachment portion along a thickness direction below a push button. In the tool to be automatically changed which is disclosed in Patent Literature 3, a bush, to which a manipulator of a tool changer is nonrotatably coupled, is mounted in the tool, and this bush is threaded (or the bush is formed to have a rectangular cross section). Therefore, the tools to be automatically changed which are disclosed in Patent Literatures 1 to 3 are not easy to produce, and much time is required for the production of the tool to be automatically changed.

An object of the present invention is to provide a tool for a press brake which is easy to produce and is suitable for automatic change.

A feature of the present invention provides a tool for a press brake, including a tool main body, an attachment portion formed on a base end side (one end side) of the tool main body and configured to be detachably attached to a tool installation portion of the press brake by using a tool changer, and a bending portion formed on a tip side (the other end side) of the tool main body and used to bend a plate-shaped workpiece, and at a correspondent position, in a lateral direction, in the tool main body to a gravity-center position (the gravity-center position of the tool), an engagement hole having a circular cross-sectional shape to be engaged with a bar-shaped finger of the tool changer extends in a thickness direction (a direction of a thickness of the tool).

The tool may be configured to be supported by the finger, in a non-rotatable state to the finger. In this case, an anti-rotation depressed portion to be engaged with a bar-shaped anti-rotation member in the tool changer may be formed in a vicinity of the engagement hole in the tool main body. Alternatively, an anti-rotation depressed portion to be engaged with a flat-plate shaped anti-rotation member in the tool changer may be formed in a vicinity of the engagement hole in the tool main body.

A peripheral edge portion of the engagement hole of the tool main body is formed as an engaged portion to be engaged with an engagement piece configured to be protruded and retracted relative to an outer peripheral surface of the finger. Alternatively, an inner stepped portion may be formed at an intermediate position of the engagement hole of the tool main body, and the inner stepped portion may be formed as an engaged portion to be engaged with an engagement piece configured to be protruded and retracted relative to an outer peripheral surface of the finger.

### Brief Description of Drawings

[Figure 1] Figure 1 is a side view showing a standard type upper tool held in a tool changer according to a first embodiment, and an upper tool holder of a press brake.
[Figure 2] Figure 2 is a side view (partially cross sectional) showing a goose-neck type upper tool attached to the upper tool holder of the press brake by the tool changer according to the first embodiment.
[Figure 3] Figure 3 is a perspective view showing the above goose-neck type upper tool held in the tool changer.
[Figure 4] Figure 4(a) is a front view of the above standard type upper tool, and Figure 4(b) is a side view of the upper tool.
[Figure 5] Figure 5(a) is a front view of the above goose-neck type upper tool, and Figure 5(b) is a side view of the upper tool.
[Figure 6] Figure 6(a) is a front view of the above goose-neck type upper tool (with an expanded portion), and Figure 6(b) is a side view of the upper tool.
[Figure 7] Figure 7 is an exploded perspective view showing a relation between a peripheral configuration of a finger, including an anti-rotation member, and the upper tool.
[Figure 8] Figure 8 is a side cross-sectional view showing a relation between the peripheral configuration of the finger, including the anti-rotation member, and the upper tool.
[Figure 9] Figure 9(a) is a side cross-sectional view showing a behavior prior to engagement of an engagement piece in an inner stepped portion of an engagement hole, and Figure 9(b) is a perspective view showing a behavior that the engagement piece is pushed by a push face of the finger to abut on a stopper.
[Figure 10] Figure 10(a) is a cross-sectional view showing a behavior that the engagement piece is engaged with the inner stepped portion of the engagement hole, and Figure 10(b) is a perspective view showing a behavior that the engagement piece is pulled up with a pull face of the finger.
[Figure 11] Figure 11(a) is cross-sectional view showing a behavior that the engagement piece is engaged with a terminal (an inner stepped portion) of a straight groove formed in the engagement hole, and Figure 11(b) is a perspective view of the above goose-neck type upper tool (with a key groove).
[Figure 12] Figure 12(a) is a cross-sectional view showing a behavior before an elastic tube is expanded, and Figure 12(b) is a cross-sectional view showing a behavior that the expanded elastic tube is pressed into contact with an inner surface of the engagement hole.
[Figure 13] Figure 13 is a perspective view showing an anti-rotation member including a plurality of edges.
[Figure 14] Figure 14 is a side view showing a behavior that the edge of the anti-rotation member is engaged in an anti-rotation depressed portion of a tool main body.
[Figure 15] Figure 15 is a side view (partially cross sectional) showing a lower tool (a tool main body is thicker than an attachment portion) attached to a lower tool holder of a press brake according to a tool changer of a second embodiment.
[Figure 16] Figure 16 is a view showing the lower tool (the tool main body is thinner than the attachment portion) attached to the lower tool holder of the press brake according to the tool changer of the second embodiment.
[Figure 17] Figure 17 is a view showing the lower tool (the tool main body and the attachment portion have the same thickness) attached to the lower tool holder of the press brake according to the tool changer of the second embodiment.
[Figure 18] Figure 18(a) is a front view of the lower tool shown in Figure 15, and Figure 18(b) is a side view of the lower tool.
[Figure 19] Figure 19(a) is a front view of the lower tool shown in Figure 16, and Figure 19(b) is a side view of the lower tool.
[Figure 20] Figure 20(a) is a front view of the lower tool shown in Figure 17, and Figure 20(b) is a side view of the lower tool.

### Description of Embodiment

Description will be made as to a tool for a press brake according to an embodiment with reference to the drawings.

Note that hereinafter, "provided" includes, in addition to being directly provided, being provided indirectly via a separate member. "A tool changer" includes a manipulator that performs automatic change of a tool. "The circular cross-sectional shape" is not limited to a precisely circular cross-sectional shape, and includes a substantially circular shape close to the precisely circular cross-sectional shape. In the drawings, "FF" indicates a front direction, "FR" indicates a rear direction, "L" indicates a left direction, "R" indicates a right direction, "U" indicates an up direction, and "D" indicates a down direction.

### (First Embodiment)

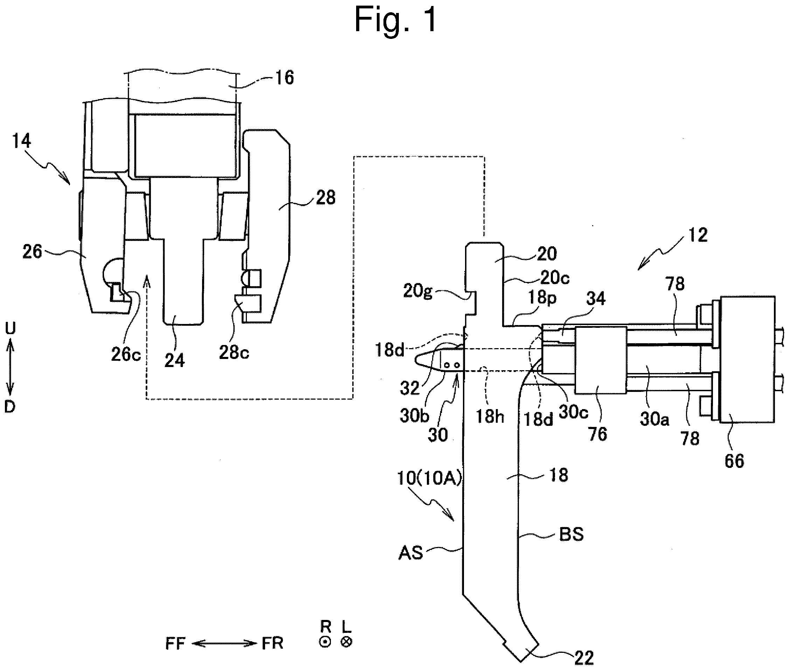

As shown in Figure 1 to Figure 3, an upper tool (a tool) 10 according to a first embodiment may be automatically changed with respect to a plurality of upper tool holders 14 (one is only shown) as tool installation portions of a press brake by using a tool changer 12. The tool changer 12 is disposed on a rear side of (behind) an upper table 16 of the press brake. The plurality of upper tool holders 14 are provided via a space in a right-left direction at a lower end of the upper table 16. Note that a dotted arrow in Figure 1 only indicates an installation position of the upper tool 10, and does not indicate an installation path of the upper tool 10.

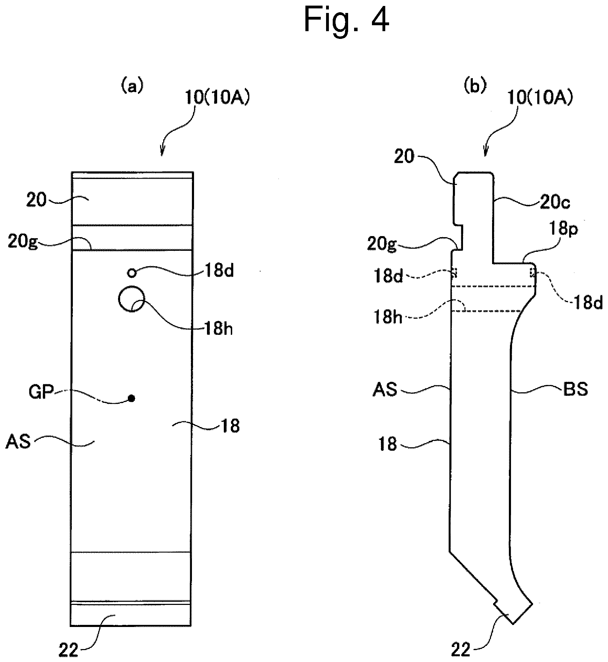

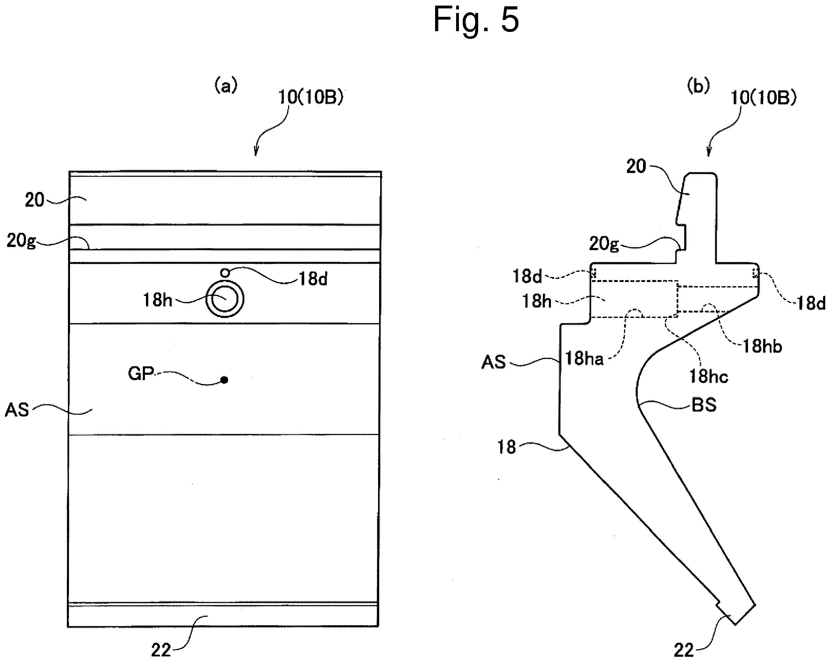

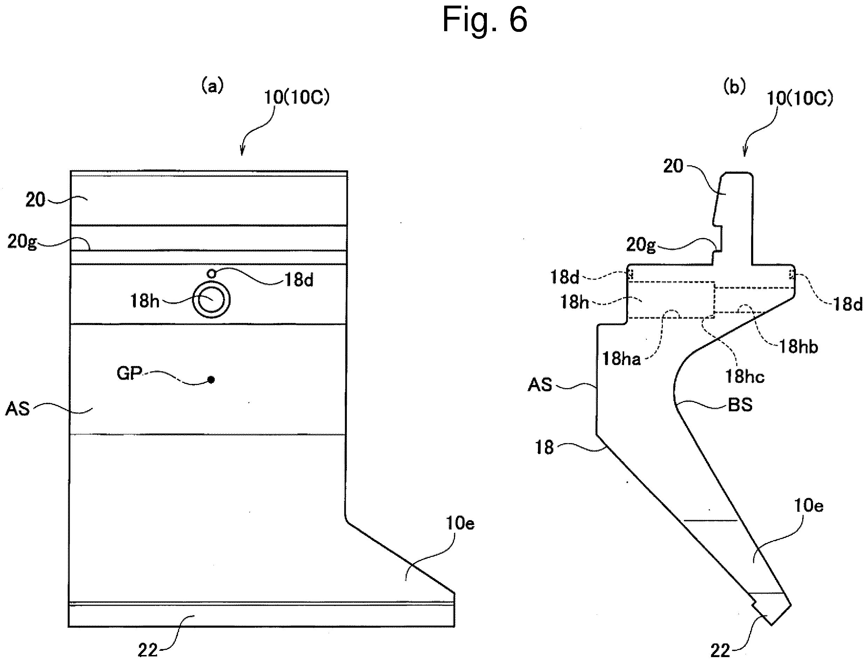

Figure 4(a) and Figure 4(b) show a standard type upper tool 10 (10A), and Figure 5(a) and Figure 5(b) show a goose-neck type upper tool 10 (10B). Figure 6(a) and Figure 6(b) show a goose-neck type upper tool 10 (10C) with an expanded portion.

As shown in Figure 4 to Figure 6, the upper tool 10 includes a tool main body 18. On a base end side (an upper end side) of the tool main body 18, an attachment portion 20 to be detachably attached to the upper tool holder 14 by using the tool changer 12 is formed. On a tip side (a lower end side) of the tool main body 18, a bending portion 22 to bend a plate-shaped workpiece (not shown) is formed.

As shown in Figure 1 to Figure 6, the attachment portion 20 includes a vertical contact surface 20c on a back side thereof. In a state where an anterior surface AS of the upper tool 10 faces forward, the contact surface 20c of the attachment portion 20 comes in contact with a front surface of a holder main body 24 of the upper tool holder 14. In a state where the anterior surface AS of the upper tool 10 faces forward, the attachment portion 20 is fixed to the holder main body 24 by using a first clamp 26 of the upper tool holder 14. Furthermore, in a state where a back surface BS of the upper tool 10 faces forward due to a turn-over of an orientation of the upper tool 10, the contact surface 20c of the attachment portion 20 comes in contact with a rear surface of the holder main body 24 of the upper tool holder 14. In the state where the back surface BS of the upper tool 10 faces forward, the attachment portion 20 is fixed to the holder main body 24 by using a second clamp 28 of the upper tool holder 14. Furthermore, on a front side of the attachment portion 20, an anti-drop groove 20g is formed along a lateral direction (a direction along a width of the upper tool 10).

A portion of the tool main body 18 which is close to the attachment portion 20 is thicker than another portion of the tool main body 18. The tool main body 18 includes, in an upper part thereof, a pressure receiving face 18p that receives press force (pressurizing force) of the upper table 16. The pressure receiving face 18p of the tool main body 18 is at right angles to the contact surface 20c of the attachment portion 20.

At a correspondent position, in the lateral direction, in the tool main body 18 to a gravity-center position GP (of the upper tool 10), an engagement hole 18h having a circular cross-sectional shape to be engaged with a round-bar shaped finger 30 in the tool changer 12 extends in a thickness direction (a direction along a thickness of the upper tool 10). Note that in a case where the upper tool 10 does not include an expanded portion 10e (see Figure 6) protruded outwardly in the lateral direction, that is, in a case where the upper tool 10 has a rectangular shape in a front view, the gravity-center position GP in the tool main body 18 is positioned on a center line of the tool main body 18 in the lateral direction. When it is described that "the engagement hole 18h is positioned at the correspondent position, in the lateral direction, to the gravity-center position GP", it is indicated that in the front view, a center of the engagement hole 18h is positioned on a vertical line passing the gravity-center position GP (i.e., a straight line at right angles to a straight line extending in the lateral direction).

As shown in Figure 1 and Figure 4, in a case where the finger 30 is inserted into the engagement hole 18h from a back surface BS side of the upper tool 10A with the anterior surface AS of the upper tool 10A facing forward, a peripheral edge portion of the engagement hole 18h on a front side is formed as an engaged portion to be engaged with an engagement piece 32 of the finger 30 (see Figure 1). In a case where the finger 30 is inserted into the engagement hole 18h from an anterior surface AS side of the upper tool 10A with the back surface BS of the upper tool 10A facing forward due to the turn-over of the orientation of the upper tool 10A, a peripheral edge portion of the engagement hole 18h on a back side is formed as an engaged portion to be engaged with the engagement piece 32 of the finger 30.

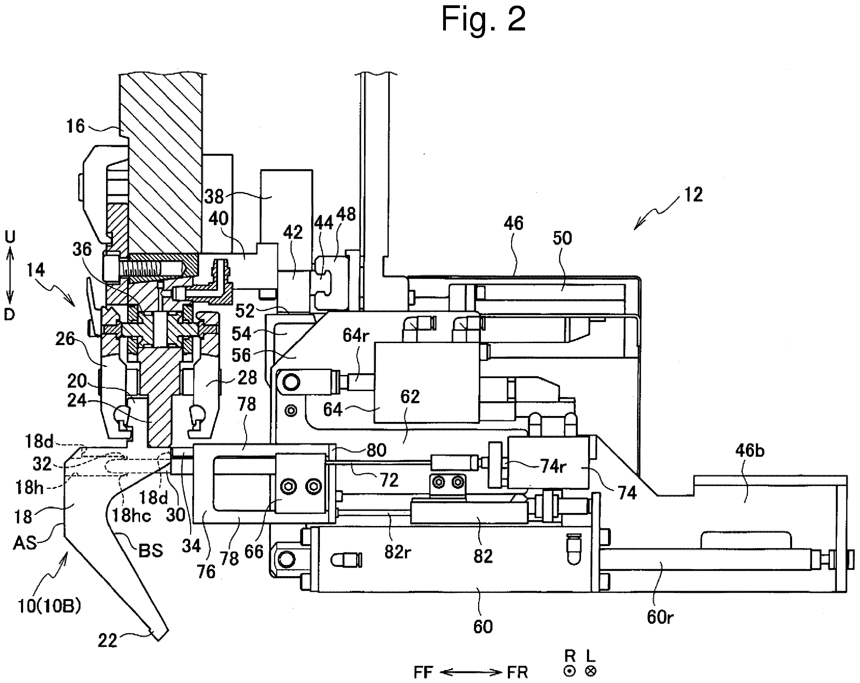

As shown in Figure 2, Figure 5 and Figure 6, each of the respective engagement holes 18h of the upper tools 10B and 10C includes a large-diameter portion 18ha on the anterior surface AS side, and includes a small-diameter portion 18hb on the back surface BS side. At an intermediate position of the engagement hole 18h (a boundary between the large-diameter portion 18ha and the small-diameter portion 18hb), a ring-shaped inner stepped portion 18hc is formed. In a case where the finger 30 is inserted into the engagement hole 18h from the back surface BS side of the upper tool 10B or 10C with the anterior surface AS of the upper tool 10B or 10C facing forward, the inner stepped portion 18hc is formed as an engaged portion to be engaged with the engagement piece 32 of the finger 30 (see Figure 2). In a case where the finger 30 is inserted into the engagement hole 18h of the tool main body 18 from the anterior surface AS side of the upper tool 10B or 10C with the back surface BS of the upper tool 10B or 10C facing forward, a peripheral edge portion of the engagement hole 18h on the back side is formed as an engaged portion to be engaged with the engagement piece 32 of the finger 30.

As shown in Figure 1, Figure 2 and Figure 4 to Figure 7, an anti-rotation depressed portion 18d to be engaged with a tip of a bar-shaped anti-rotation member 34 in the tool changer 12 is formed in a vicinity of the engagement hole 18h on each of opposite surfaces (the anterior surface AS and the back surface BS) of the tool main body 18. The anti-rotation depressed portion 18d is positioned at a correspondent position, in the lateral direction, to the engagement hole 18h and above the engagement hole 18h. If the finger 30 is inserted into the engagement hole 18h, the tip of the anti-rotation member 34 engages with the anti-rotation depressed portion 18d. That is, the upper tool 10 is configured to be supported by the finger 30 in a non-rotatable state to the finger 30.

Subsequently, a configuration of the upper tool holder 14 will be described.

As shown in Figure 1 and Figure 2, the upper tool holder 14 includes such a known configuration as disclosed in Patent Literature 4, and includes the holder main body 24 at the lower end of the upper table 16 as described above. Furthermore, on a front side of the holder main body 24, the first clamp 26 that is swingable in the front-rear direction to press the attachment portion 20 of the upper tool 10 onto the front surface of the holder main body 24 is provided. On a rear side of the holder main body 24, provided is the second clamp 28 that is swingable in the front-rear direction to press the attachment portion 20 of the upper tool 10 onto a rear surface of the holder main body 24. A pressing operation of the first clamp 26 and the second clamp 28 and an operation of releasing the pressing operation are performed by driving a clamp cylinder 36 provided above the holder main body 24. The first clamp 26 includes, in a lower part thereof, an engagement hook 26c that is engageable in the anti-drop groove 20g of the attachment portion 20. The second clamp 28 includes, in a lower part thereof, an engagement hook 28c that is engageable in the anti-drop groove 20g of the attachment portion 20.

Subsequently, a configuration of the tool changer 12 will be described.

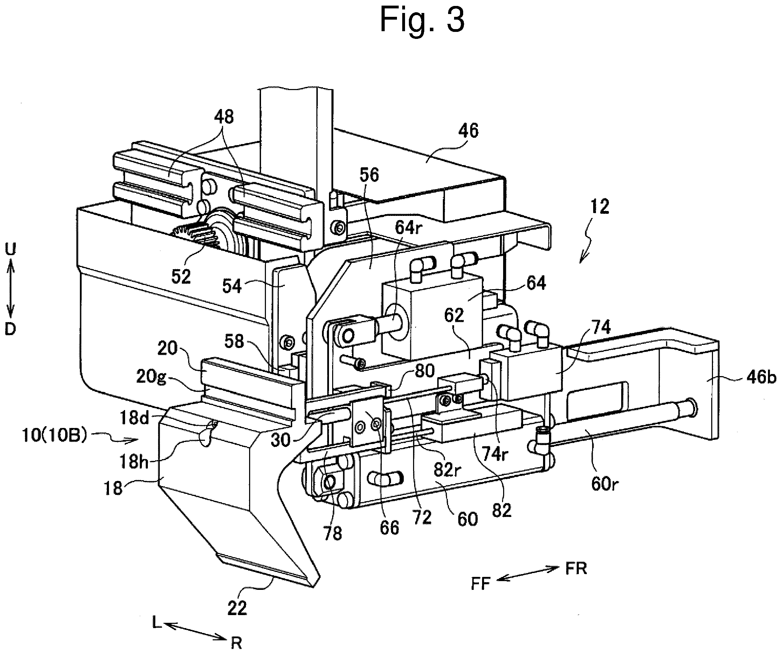

As shown in Figure 2 and Figure 3, the tool changer 12 automatically changes (installs and removes) the upper tool 10 for a plurality of upper tool holders 14 as tool installation parts. The tool changer 12 automatically changes the upper tool 10 for an upper stocker (not shown) in a tool storage (not shown) disposed on a left or right side of the press brake. In other words, the tool changer 12 automatically changes the upper tool 10 between the plurality of upper tool holders 14 and the upper stocker.

Behind the upper table 16, a beam member 38 extending in the right-left direction is provided via a plurality of connecting members 40 (only one is shown). The beam member 38 is provided with a rack member 42 extending in the right-left direction. A guide rail 44 extending in the right-left direction is attached to the rack member 42. The guide rail 44 is coupled to a boxshaped first slider 46 that is movable in the right-left direction, via a plurality of linear sliders 48. The first slider 46 includes a bracket 46b in a rear part thereof. At a suitable position of the first slider 46, a servo motor 50 is provided as an actuator that slides the first slider 46 (relative to the upper table 16) in the right-left direction. A pinion gear 52 is fixed to an output shaft of the servo motor 50, and the pinion gear 52 meshes with the rack member 42. Thus, the servo motor 50 is driven, so that the first slider 46 may slide in the right-left direction.

A base plate 54 is attached to a right side of the first slider 46. The base plate 54 is coupled to a second slider 56 that is movable in the front-rear direction, via a guide member 58. At a suitable position of the second slider 56, a hydraulic cylinder 60 is provided as a moving actuator that moves the second slider 56 (relative to the first slider 46 and the base plate 54) in the front-rear direction. The hydraulic cylinder 60 includes a piston rod 60r that can make a stroke in the front-rear direction, and a rear end of the piston rod 60r is connected to the bracket 46b of the first slider 46. Thus, the hydraulic cylinder 60 is driven, so that the second slider 56 may slide in the front-rear direction.

The second slider 56 is provided with a third slider 62 that is movable in the front-rear direction, via a guide member (not shown). At a suitable position of the second slider 56, a hydraulic cylinder 64 is provided as an actuator that slides the third slider 62 (relative to the second slider 56) in the front-rear direction. The hydraulic cylinder 64 includes a piston rod 64r that is movable in the front-rear direction, and a tip of the piston rod 64r is coupled to a suitable position of the third slider 62. Thus, the hydraulic cylinder 64 is driven, so that the third slider 62 may move relative to the second slider 56 in the front-rear direction.

In a case where the finger 30 is inserted into the engagement hole 18h from the back surface BS side of the upper tool 10 with the anterior surface AS of the upper tool 10 facing forward, the third slider 62 is brought into a state shown in Figure 2. On the other hand, in a case where the finger 30 is inserted into the engagement hole 18h from the anterior surface AS side of the upper tool 10 with the back surface BS of the upper tool 10 facing forward, the hydraulic cylinder 64 is driven to move the third slider 62 rearward from the state shown in Figure 2.

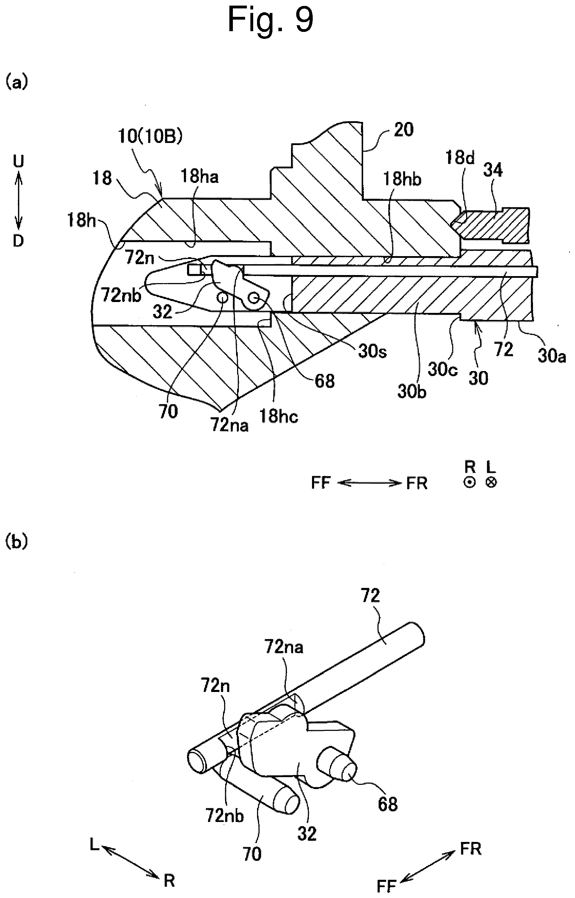

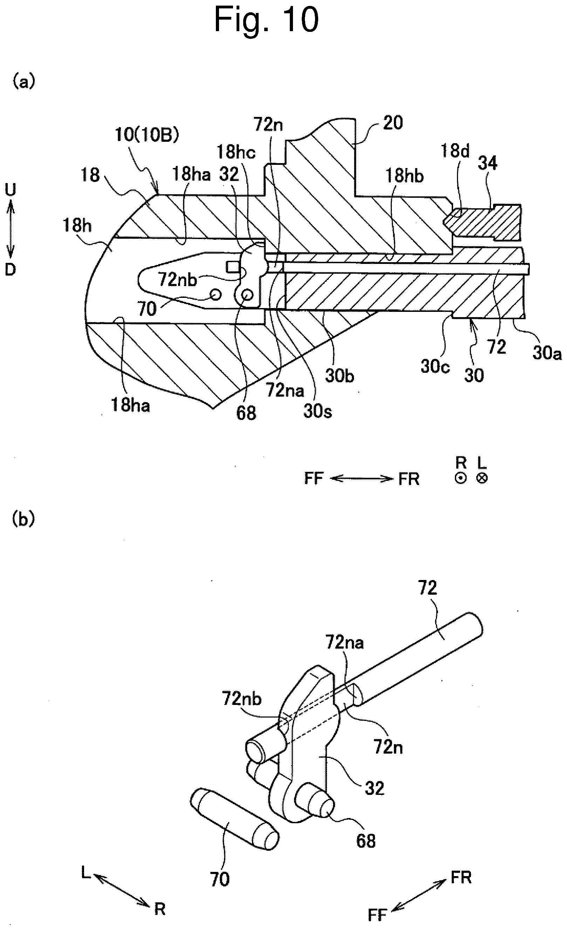

As shown in Figure 2 and Figure 7 to Figure 10, a support block 66 is attached to a front part of the third slider 62. The finger 30 that supports the upper tool 10 protrudes forward from a front surface of the support block 66. The finger 30 extends in the front-rear direction, and may be inserted into the engagement hole 18h of the upper tool 10. The finger 30 includes a large-diameter portion 30a on a base end side thereof, and includes a small-diameter portion 30b that is insertable into the engagement hole 18h, on a tip side thereof. A tip (a front end) of the finger 30 is formed in a tapered shape. At an intermediate position of the finger 30 (a boundary between the large-diameter portion 30a and the small-diameter portion 30b), a ring-shaped outer stepped portion 30c that is abuttable on the tool main body 18 is formed.

A slit 30s is formed at a tip of the small-diameter portion 30b of the finger 30. In the slit 30s, the engagement piece 32 that is swingable in an up-down direction is attached via a pivot pin 68. The engagement piece 32 is a part of the finger 30, and is capable of being protruded and retracted relative to an outer peripheral surface of the finger 30 when swinging in the up-down direction. The engagement piece 32 protrudes from the outer peripheral surface of the finger 30, to engage with the peripheral edge portion of the engagement hole 18h or the inner stepped portion 18hc of the engagement hole 18h. Note that a stopper 70 that regulates downward swinging of the engagement piece 32 is also provided in the slit 30s of the finger 30.

In the finger 30, an operation rod 72 extending in the front-rear direction and movable in the front-rear direction is provided. At a tip (a front end) of the operation rod 72, a cutout 72n is formed, and a tip of the engagement piece 32 is intruded in the cutout 72n. A push face 72na that pushes the engagement piece 32 forward to swing the piece downward is formed at a rear end of the cutout 72n. On the other hand, a pull face 72nb that pulls the engagement piece 32 rearward to swing the piece upward is formed at a front end of the cutout 72n.

At a suitable position of the third slider 62, a hydraulic cylinder 74 is provided as an actuator that swings the engagement piece 32 in the up-down direction. The hydraulic cylinder 74 includes a piston rod 74r that is movable in the front-rear direction, and a tip of the piston rod 74r is coupled to a base end (a rear end) of the operation rod 72. By driving the hydraulic cylinder 74, the operation rod 72 is moved in the front-rear direction, and the engagement piece 32 is swung in the up-down direction to be capable of being protruded and retracted relative to the outer peripheral surface of the finger 30. The tool changer 12 clamps the upper tool 10 between the engagement piece 32 protruded from an outer peripheral surface of a tip portion of the finger 30 and the outer stepped portion 30c of the finger 30.

A configuration where the engagement piece 32 is capable of being protruded and retracted relative to the outer peripheral surface of the finger 30 is not limited to the above described configuration, and any suitable configuration may be employed. For example, a movable pin may be provided in a tip portion of the operation rod 72, and the pin may be engaged in a slot formed in the engagement piece 32, so that according to this structure, the engagement piece 32 is capable of being protruded and retracted relative to the outer peripheral surface of the finger 30. Alternatively, the operation rod 72 may be provided with a cam or wedge member, and the cam or wedge member may be brought into contact with the engagement piece 32, so that according to this structure, the engagement piece 32 is capable of being protruded and retracted relative to the outer peripheral surface of the finger 30. Furthermore, the finger 30 is not limited to the round bar shape, and may be formed in a polygonal-bar shape such as a square bar-shape.

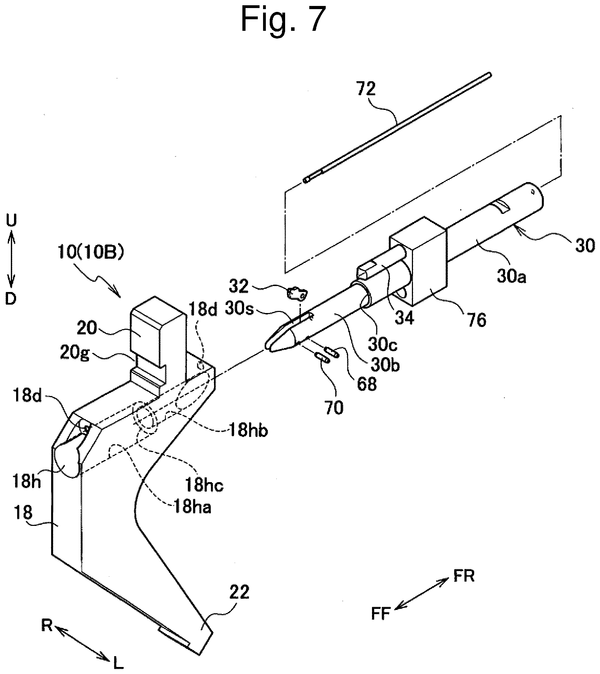

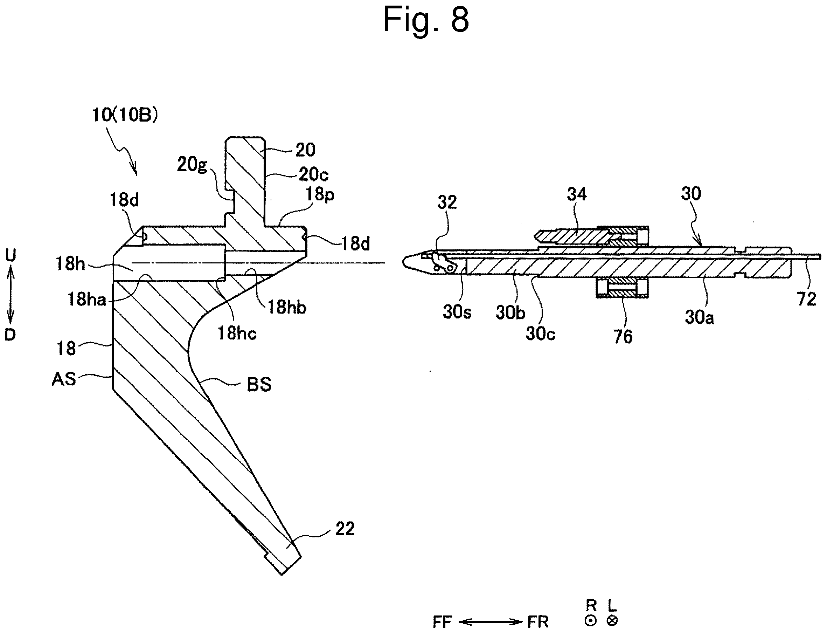

As shown in Figure 1, Figure 2, Figure 7 and Figure 8, the large-diameter portion 30a of the finger 30 is provided with a slide block 76 that is slidable relative to the finger 30 in the front-rear direction. The sliding of the slide block 76 is guided by the finger 30 (the large-diameter portion 30a). In the support block 66 described above, a pair of slide rods 78 that are slidable (relative to the support block 66) in the front-rear direction are supported. The slide block 76 is coupled integrally to tips (front ends) of the pair of slide rods 78, and a connecting member 80 is coupled to base ends (rear ends) of the pair of slide rods 78. Note that the slide block 76 shown in Figure 7 and Figure 8 is different in shape from the slide block 76 shown in Figure 1 and Figure 2, but has the same function (schematically shown in Figure 7 and Figure 8).

The anti-rotation member 34 that prevents rotation of the upper tool 10 supported by the finger 30 as described above is attached to a front surface of the slide block 76. The tapered tip of the anti-rotation member 34 may be engaged in the anti-rotation depressed portion 18d of the upper tool 10. The anti-rotation member 34 presses the upper tool 10 toward the engagement piece 32 protruded from the outer peripheral surface of the finger 30. That is, the anti-rotation member 34 cooperates with the engagement piece 32 protruded from the outer peripheral surface of the finger 30 to clamp the upper tool 10. The third slider 62 is provided with a hydraulic cylinder 82 as an actuator that moves the anti-rotation member 34 (relative to the third slider 62) in the front-rear direction. The hydraulic cylinder 82 includes a piston rod 82r that is movable in the front-rear direction, and a tip of the piston rod 82r is coupled to the connecting member 80. Thus, the hydraulic cylinder 82 is driven, so that the anti-rotation member 34 may be moved integrally with the slide block 76 in the front-rear direction to be engaged in and disengaged from the anti-rotation depressed portion 18d.

Subsequently, advantages of the first embodiment will be described.

Upon releasing the pressing of the attachment portion 20 with the first clamp 26 and the second clamp 28 (the upper tool 10 does not drop down), the first slider 46 is moved in the right-left direction, and the finger 30 is opposed to the engagement hole 18h. Next, the second slider 56 moves forward to insert the finger 30 into the engagement hole 18h. The outer stepped portion 30c of the finger 30 abuts on the peripheral edge portion of the engagement hole 18h. The engagement piece 32 protrudes from the outer peripheral surface of the finger 30, to engage with the peripheral edge portion of the engagement hole 18h or the inner stepped portion 18hc of the engagement hole 18h. Consequently, the upper tool 10 is clamped between the engagement piece 32 and the outer stepped portion 30c of the finger 30. Next, the anti-rotation member 34 is moved forward integrally with the slide block 76, and the tip of the anti-rotation member 34 engages in the anti-rotation depressed portion 18d. As a result, the upper tool 10 is supported by the finger 30 in a non-rotatable state to the finger 30. Then, the first slider 46 is moved to the right (or to the left), so that the upper tool 10 is removed from the upper tool holder 14 (the upper table 16) while keeping a vertical posture.

If the width of the upper tool 10 is smaller than a space between the adjacent upper tool holders 14, an operation may be performed as follows. The upper tool 10 is supported by the finger 30, and then the first slider 46 is moved in the right-left direction, to once stop the upper tool 10 between the adjacent upper tool holders 14. Then, the second slider 56 is moved rearward, so that the upper tool 10 is removed from the upper tool holder 14 (the upper table 16) while keeping the vertical posture.

In a case where the upper tool 10 is installed to the upper tool holder 14, an operation reverse to the above operation is performed. In this way, the upper tool 10 can be automatically changed (installed and removed) with respect to the upper tool holder 14.

Also, in a case where the upper tool 10 is automatically changed with respect to the upper stocker of the tool storage, a similar operation is performed. Consequently, the upper tool 10 can be automatically changed between the plurality of upper tool holders 14 and the upper stocker.

As described above, at the correspondent position, in the lateral direction, in the tool main body 18 to the gravity-center position GP, the engagement hole 18h having a circular cross-sectional shape to be engaged with the finger 30 extends in the thickness direction. Consequently, only by engaging the finger 30 in the engagement hole 18h, the posture of the upper tool 10 to the finger 30 can be stabilized while inhibiting the rotation of the upper tool 10. In particular, the upper tool 10 is supported by the finger 30 in the non-rotatable state to the finger 30, and hence the posture of the upper tool 10 can be further stabilized. Consequently, even if the upper tool 10 is not provided with a member and an elongated hole that correspond to an operation member extending in the vertical direction (the direction along the height of the upper tool 10) (see Patent Literatures 1 and 2), the upper tool 10 can be automatically changed with respect to the plurality of upper tool holders 14 of the press brake by using the tool changer 12.

Therefore, according to the first embodiment, the height of the upper tool 10 to be automatically changed is set to about the same as a height of a usual upper tool (not shown), and the usual upper tool is postprocessed. Consequently, the tool can be used as the upper tool 10 to be automatically changed. Furthermore, difficulty in production of the upper tool 10 to be automatically changed is eliminated, while production time for the upper tool 10 to be automatically changed can be shortened. That is, the upper tool 10 of the first embodiment is easy to produce (can be produced also by modifying the existing tool) and is suitable for the automatic change.

### (Modification of First Embodiment)

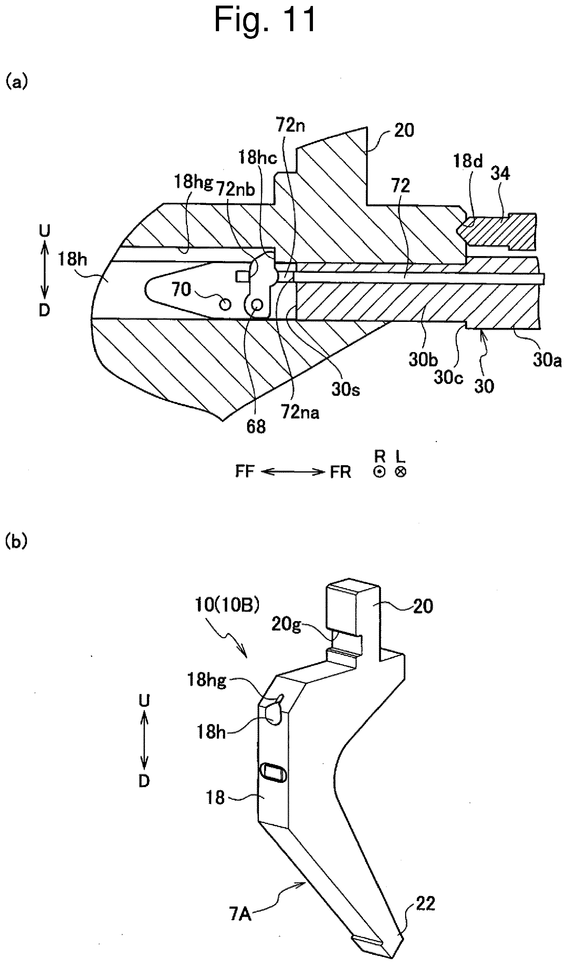

As shown in Figure 11, in the upper tool 10B, a straight groove (a key groove) 18hg is formed in an inner peripheral surface of the engagement hole 18h. The straight groove 18hg is formed from an anterior surface AS side. A terminal of the straight groove 18hg is formed as the inner stepped portion 18hc described above.

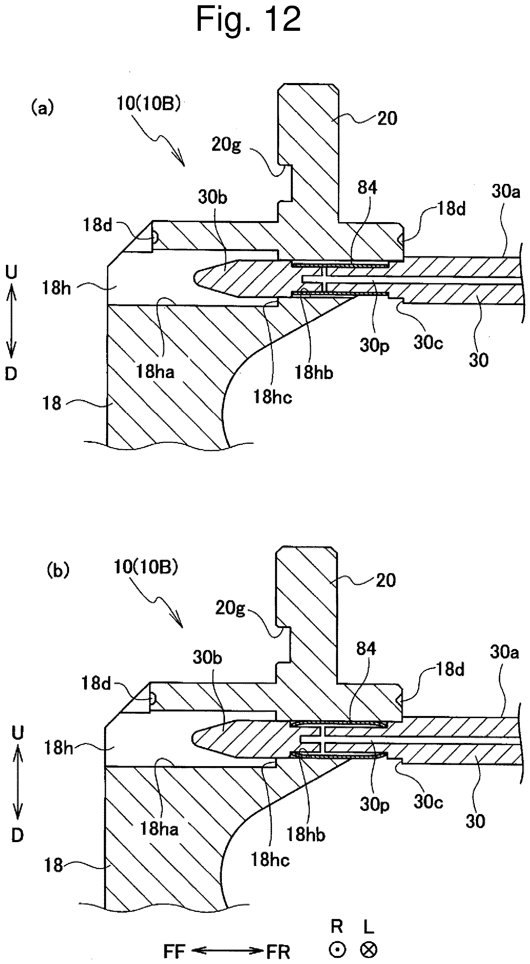

Note that, for the finger 30, as shown in Figure 12, an elastic tube 84 such as a rubber tube may be provided in the small-diameter portion 30b of the finger 30. In this case, after the small-diameter portion 30b is inserted into the engagement hole 18h, air is supplied through an air supply passage 30p to expand the elastic tube 84. The rotation of the upper tool 10 is prevented by using friction between an outer peripheral surface of the expanded elastic tube 84 and the inner peripheral surface of the engagement hole 18h.

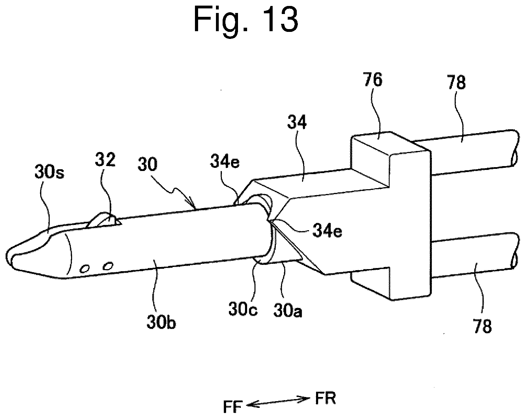

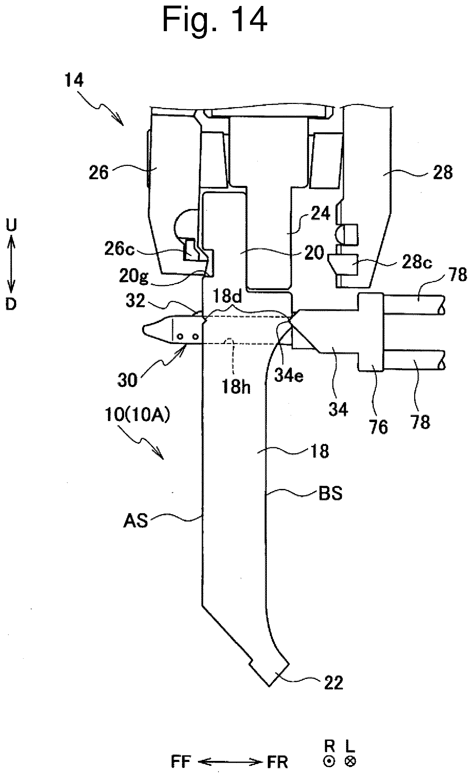

Furthermore, for the anti-rotation member 34, as shown in Figure 13 and Figure 14, a plurality of sharp edges 34e may be formed in the anti-rotation member 34. In this case, the corresponding anti-rotation depressed portion 18d of the upper tool 10 is pressed with the sharp edges 34e, thereby preventing the rotation of the upper tool 10.

### (Second Embodiment)

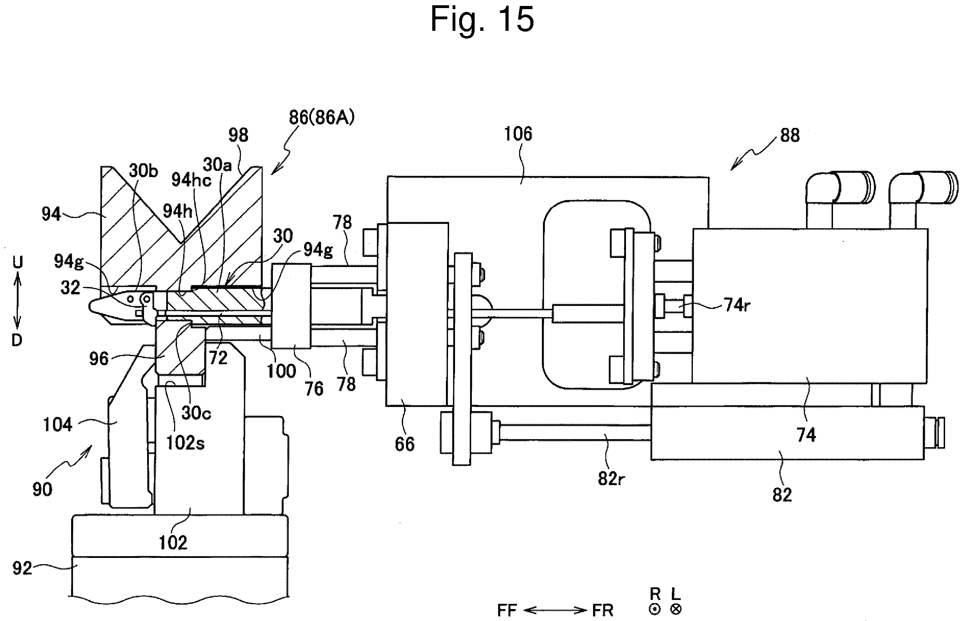

As shown in Figure 15 to Figure 17, a lower tool (a tool) 86 according to a second embodiment may be automatically changed with respect to a lower tool holder 90 as a tool installation portion of a press brake by using a tool changer 88. The tool changer 88 is disposed on a rear side of (behind) a lower table 92 of the press brake. The lower tool holder 90 is provided at an upper end of the lower table 92, and extends in a right-left direction.

As shown in Figure 15 to Figure 20, the lower tool 86 includes a tool main body 94. On a base end side (a lower end side) of the tool main body 94, an attachment portion 96 to be detachably attached to the lower tool holder 90 by using the tool changer 88 is formed. On a tip side (an upper end side) of the tool main body 94, a bending portion 98 to bend a plate-shaped workpiece (not shown) is formed. Note that the shown bending portion 98 is a V-shaped groove, but may be a U-shaped groove or the like.

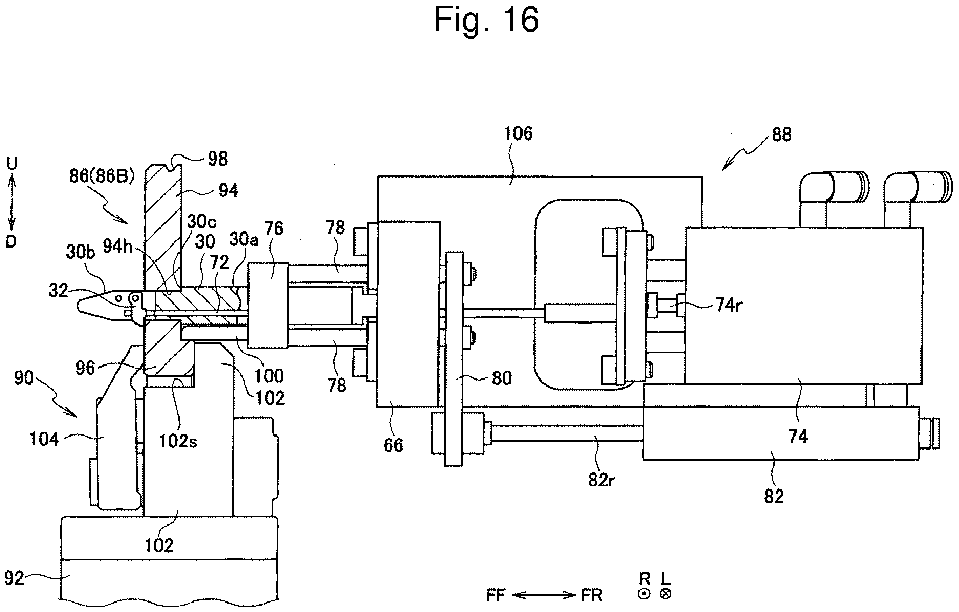

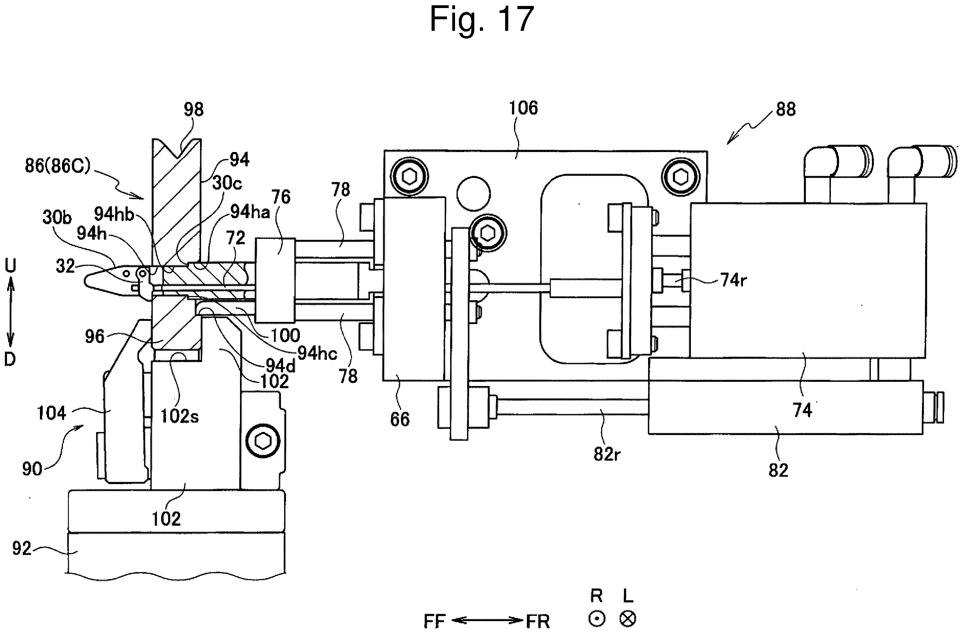

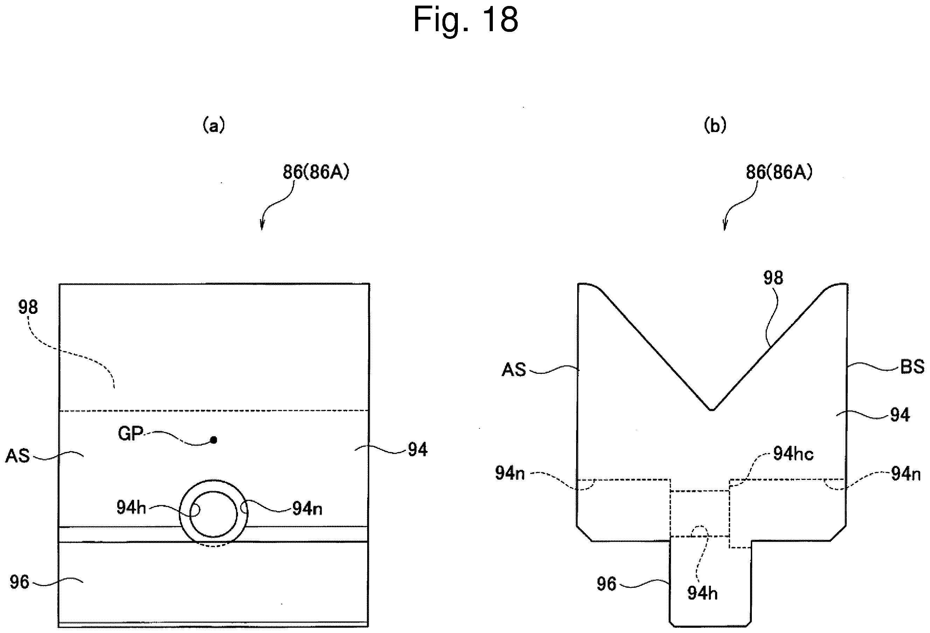

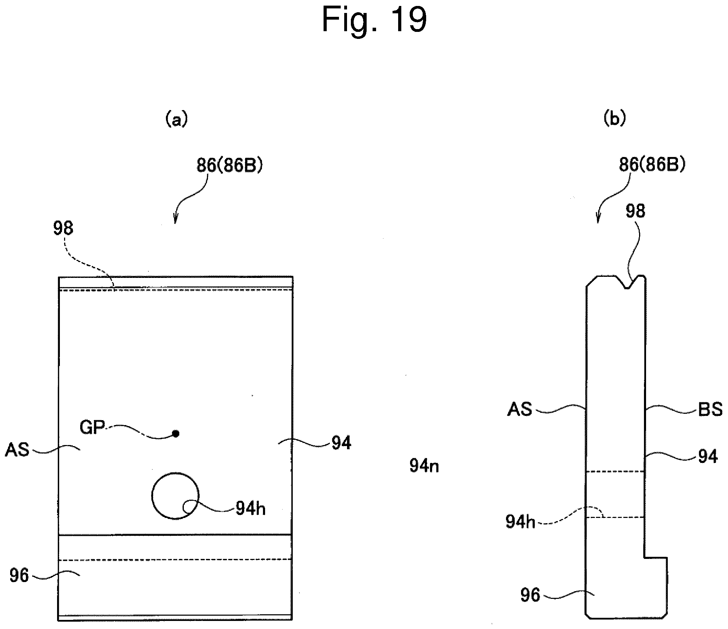

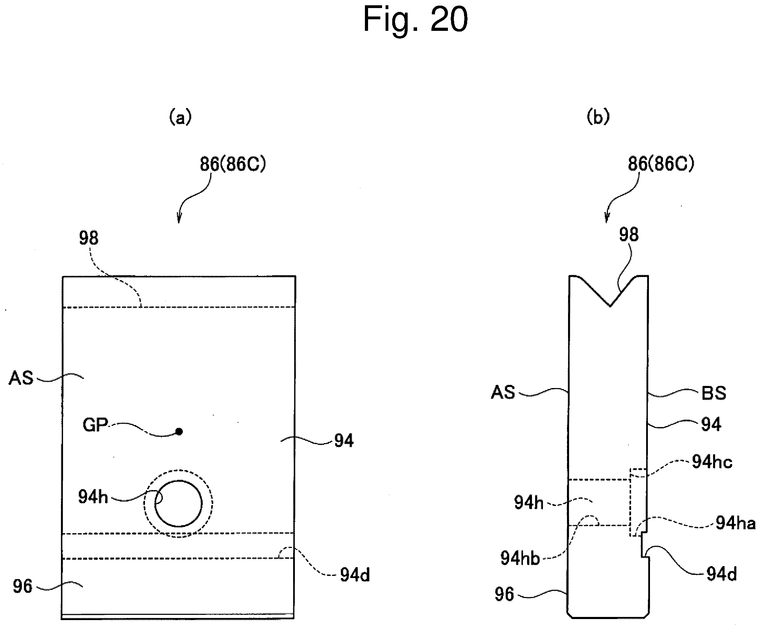

Figure 15 and Figure 18 show the lower tool 86 (86A) in which the tool main body 94 is thicker than the attachment portion 96, and a lower surface of the tool main body 94 forms a stepped surface. Figure 16 and Figure 19 show the lower tool 86 (86B) in which the tool main body 94 is thinner than the attachment portion 96, and an upper surface of the attachment portion 96 forms a stepped surface. Figure 17 and Figure 20 show the lower tool 86 (86C) in which the tool main body 94 and the attachment portion 96 have the same thickness.

As shown in Figure 15 to Figure 20, at a correspondent position, in a lateral direction, in the tool main body 94 to a gravity-center position GP (of the lower tool 86), an engagement hole 94h having a circular cross-sectional shape to be engaged with a round-bar shaped finger 30 in the tool changer 88 extends in a thickness direction. Note that the gravity-center position GP in the tool main body 94 is positioned on a center line of the tool main body 94 in the lateral direction. When it is described that "the engagement hole 94h is positioned at the correspondent position, in the lateral direction, to the gravity-center position GP", it is indicated that in a front view, a center of the engagement hole 94h is positioned on a vertical line passing the gravity-center position GP (i.e., a straight line at right angles to a straight line extending in the lateral direction).

As shown in Figure 15 and Figure 18, cutouts 94n having an arc cross-sectional shape are formed on opposite sides (a front side and a back side) of the engagement hole 94h of the lower tool 86A, respectively. A radius of each cutout 94n is larger than a radius of the engagement hole 94h. A ring-shaped inner stepped portion 94hc is formed at an intermediate position of the engagement hole 94h.

As shown in Figure 17 and Figure 20, the engagement hole 94h of the lower tool 86C includes a large-diameter portion 94ha on a back surface BS side, and includes a small-diameter portion 94hb on an anterior surface AS side. The ring-shaped inner stepped portion 94hc is formed at an intermediate position of the engagement hole 94h (a boundary between the large-diameter portion 94ha and the small-diameter portion 94hb).

As shown in Figure 15 to Figure 17, a peripheral edge portion of the engagement hole 94h on the front side is formed as an engaged portion to be engaged with an engagement piece 32 of the finger 30.

As shown in Figure 15 and Figure 18, if the finger 30 is inserted into the engagement hole 94h of the lower tool 86A, an upper surface of a flat-plate shaped anti-rotation member 100 comes in surface contact with the lower surface (the stepped surface) of the tool main body 94. As shown in Figure 16 and Figure 19, if the finger 30 is inserted into the engagement hole 94h of the lower tool 86B, a lower surface of the flat-plate shaped anti-rotation member 100 comes in surface contact with the upper surface (the stepped surface) of the attachment portion 96. Furthermore, as shown in Figure 17 and Figure 20, an anti-rotation depressed portion 94d that engages with a tip of the flat-plate shaped anti-rotation member 100 is formed below the engagement hole 94h in the tool main body 94 of the lower tool 86C. The anti-rotation depressed portion 94d is formed as a straight square groove. If the finger 30 is inserted into the engagement hole 94h of the lower tool 86C, the tip of the flat-plate shaped anti-rotation member 100 engages in the anti-rotation depressed portion 94d. That is, in any case of the lower tools 86A to 86C, the lower tool 86 is configured to be supported by the finger 30 in a non-rotatable state to the finger 30.

Subsequently, a configuration of the lower tool holder 90 will be briefly described.

As shown in Figure 15, the lower tool holder 90 includes a known configuration, and includes a holder main body 102 extending in the right-left direction, at the upper end of the lower table 92 as described above. Furthermore, in an upper part of the holder main body 102, a corner portion 102s that accommodates the attachment portion 96 of the lower tool 86 is formed. On a front side of the holder main body 102, provided is a clamp 104 that is swingable in a front-rear direction to press the attachment portion 96 of the lower tool 86 onto a rear wall (a rear surface) of the corner portion 102s of the holder main body 102. A pressing operation of the clamp 104 and an operation of releasing the pressing operation are performed by driving a clamp cylinder (not shown) provided in the holder main body 102.

Subsequently, description will be made as to components of the tool changer 88 which are different from components of the tool changer 12 (see Figure 2) in the first embodiment. Note that the component that is the same as or equivalent to the component of the tool changer 12 in the first embodiment is denoted with the same reference sign.

As shown in Figure 15 to Figure 17, the tool changer 88 automatically changes (installs and removes) the lower tool 86 with respect to the lower tool holder 90 as a tool installation portion. The tool changer 88 automatically changes the lower tool 86 with respect to a lower stocker (not shown) in a tool storage (not shown) disposed on a side of the press brake in the right-left direction. In other words, the tool changer 88 automatically changes the lower tool 86 between the lower tool holder 90 and the lower stocker.

The tool changer 88 includes, behind the lower table 92, a slider 106 that is slidable in the right-left direction, the front-rear direction and an up-down direction. The slider 106 corresponds to the third slider 62 (see Figure 2) of the tool changer 12, but is slidable also in the up-down direction unlike the third slider 62.

The finger 30 that supports the lower tool 86 protrudes forward from a front surface of a support block 66. The finger 30 extends in the front-rear direction, and may be inserted into the engagement hole 94h of the lower tool 86. The finger 30 includes a large-diameter portion 30a on a base end side thereof, and includes, on a tip side thereof, a small-diameter portion 30b that is insertable into the engagement hole 94h. A tip (a front end) of the finger 30 is formed in a tapered shape. At an intermediate position of the finger 30 (a boundary between the large-diameter portion 30a and the small-diameter portion 30b), an outer stepped portion 30c that is abuttable on the tool main body 94 is formed.

In a slit 30s of the finger 30, the engagement piece 32 that is swingable in the up-down direction is provided. The engagement piece 32 is a part of the finger 30, and is capable of being protruded and retracted relative to an outer peripheral surface of the finger 30 when swinging in the up-down direction. The engagement piece 32 protrudes from an outer peripheral surface of the finger 30, to engage with the inner stepped portion 94hc of the engagement hole 94h or the peripheral edge portion of the engagement hole 94h. The tool changer 88 clamps the lower tool 86 between the engagement piece 32 protruded from the outer peripheral surface of the finger 30 on a tip side and the outer stepped portion 30c of the finger 30.

The flat-plate shaped anti-rotation member 100 that prevents rotation of the lower tool 86 supported by the finger 30 is attached to a front surface of a slide block 76. The upper surface of the anti-rotation member 100 may come in surface contact with the lower surface (the stepped surface) of the tool main body 94 of the lower tool 86A (see Figure 15). The lower surface of the anti-rotation member 100 may come in surface contact with the upper surface (the stepped surface) of the attachment portion 96 of the lower tool 86B (see Figure 16). The tip of the anti-rotation member 100 may engage in the anti-rotation depressed portion 94d of the lower tool 86C (see Figure 17).

Subsequently, advantages of the second embodiment will be described.

Upon releasing the pressing operation of the clamp 104, the slider 106 is moved in the right-left direction, and the finger 30 is opposed to the engagement hole 94h. Next, the slider 106 is moved forward to insert the finger 30 into the engagement hole 94h. The outer stepped portion 30c of the finger 30 abuts on the peripheral edge portion of the engagement hole 18h of the lower tool 86 or the inner stepped portion 94hc of the engagement hole 94h. The engagement piece 32 is protruded from the outer peripheral surface of the finger 30, to engage with the peripheral edge portion of the engagement hole 94h. Consequently, the lower tool 86 is clamped between the engagement piece 32 and the outer stepped portion 30c of the finger 30. Next, the anti-rotation member 100 is moved forward integrally with the slide block 76, and the upper surface of the anti-rotation member 100 comes in surface contact with the lower surface of the tool main body 94 (the lower surface of the anti-rotation member 100 comes in surface contact with the upper surface of the attachment portion 96, or the tip of the anti-rotation member 100 engages in the anti-rotation depressed portion 94d of the lower tool 86C). As a result, the lower tool 86 is supported by the finger 30 in a non-rotatable state to the finger 30. Then, the slider 106 is moved upward, so that the lower tool 86 is removed from the lower tool holder 90 (the lower table 92) while keeping a vertical posture.

In a case where the lower tool 86 is installed to the lower tool holder 90, an operation reverse to the above operation is performed. In this way, the lower tool 86 can be automatically changed (installed and removed) with respect to the lower tool holder 90.

Also, in a case where the lower tool 86 is automatically changed with respect to the lower stocker of the tool storage, a similar operation is performed. Consequently, the lower tool 86 can be automatically changed between the lower tool holder 90 and the lower stocker.

As described above, at the correspondent position, in the lateral direction, in the tool main body 94 to a gravity-center position, the engagement hole 94h having the circular cross-sectional shape to be engaged with the finger 30 extends in the thickness direction. Consequently, only by engaging the finger 30 in the engagement hole 94h, the posture of the lower tool 86 to the finger 30 can be stabilized while inhibiting the rotation of the lower tool 86. In particular, the lower tool 86 is supported by the finger 30 in the non-rotatable state to the finger 30, and hence the posture of the lower tool 86 to the finger 30 can be further stabilized. Consequently, even if the lower tool 86 is not provided with a member and an elongated hole that correspond to an operation member extending in a vertical direction (the direction along the height of the lower tool 86) (see Patent Literatures 1 and 2), the lower tool 86 can be automatically changed with respect to the lower tool holder 90 of the press brake by using the tool changer 88.

Therefore, according to the second embodiment, the height of the lower tool 86 to be automatically changed is set to about the same as a height of a usual lower tool (not shown), and the usual lower tool is postprocessed. Consequently, the tool can be used as the lower tool 86. Furthermore, difficulty in production of the lower tool 86 to be automatically changed is eliminated, while production time for the lower tool 86 can be shortened. That is, the lower tool 86 of the second embodiment is easy to produce (can be produced also by modifying the existing tool) and is suitable for the automatic change.

The present invention is not limited to the above embodiments, and can be embodied, for example, in various aspects as follows. The tip portion of the finger 30 may be formed in a cylindrical shape, and in the tip portion of the finger 30, a slit extending in the front-rear direction may be formed. In this case, if a tapered push rod is pushed into the finger 30, an outer diameter of the tip portion of the finger 30 is enlarged, and the tip portion is pressed onto the inner peripheral surface of the engagement hole 18h (94h). As a result, the tool 10 (86) is supported in the non-rotatable state by the finger 30. Furthermore, the present invention also extends to the tool 10 (86) used (for use) in a generalpurpose press brake that is not equipped with the tool changer 12 (88).

All contents of Japanese Patent Application Nos. 2018-134151 (filed on July 17, 2018), 2018-134168 (filed on July 17, 2018), 2018-140886 (filed on July 27, 2018), 2018-169366 (filed on September 11, 2018), 2019-87437 (filed on May 7, 2019), 2019-92892 (filed on May 16, 2019), 2019-109717 (filed on June 12, 2019), 2019-111277 (filed on June 14, 2019), and 2019-126935 (filed on July 8, 2019) are referred to herein and accordingly fully incorporated herein. The present invention has been described above with reference to the embodiments of the present invention, but the present invention is not limited to the above embodiments. The scope of the present invention is determined in the context of claims.

## Claims

1. A tool for a press brake, comprising:
a tool main body,
an attachment portion formed on a base end side of the tool main body and configured to be detachably attached to a tool installation portion of the press brake by using a tool changer, and
a bending portion formed on a tip side of the tool main body and used to bend a plate-shaped workpiece, wherein
at a correspondent position, in a lateral direction, in the tool main body to a gravity-center position, an engagement hole having a circular cross-sectional shape to be engaged with a bar-shaped finger of the tool changer extends in a thickness direction.

2. The tool according to claim 1, wherein the tool is configured to be supported by the finger, in a non-rotatable state to the finger.

3. The tool according to claim 2, wherein an anti-rotation depressed portion to be engaged with an anti-rotation member in the tool changer is formed in a vicinity of the engagement hole in the tool main body.

4. The tool according to claim 2, wherein an anti-rotation depressed portion to be engaged with a flat-plate shaped anti-rotation member in the tool changer is formed in a vicinity of the engagement hole in the tool main body.

5. The tool according to any one of claims 1 to 4, wherein a peripheral edge portion of the engagement hole of the tool main body is formed as an engaged portion to be engaged with an engagement piece configured to be protruded and retracted relative to an outer peripheral surface of the finger.

6. The tool according to any one of claims 1 to 4, wherein an inner stepped portion is formed at an intermediate position of the engagement hole of the tool main body, and the inner stepped portion is formed as an engaged portion to be engaged with an engagement piece configured to be protruded and retracted relative to an outer peripheral surface of the finger.
